**Europäisches Patentamt**

**European Patent Office**

**Office européen des brevets**

(19)

(11) Veröffentlichungsnummer: **0 058 732**
**B1**

(12) # EUROPÄISCHE PATENTSCHRIFT

(45) Veröffentlichungstag der Patentschrift:
**31.10.84**

(51) Int. Cl.³: **B 62 D 53/08**

(21) Anmeldenummer: **81101246.7**

(22) Anmeldetag: **21.02.81**

(54) **Sattelkupplung.**

(43) Veröffentlichungstag der Anmeldung:
**01.09.82 Patentblatt 82/35**

(45) Bekanntmachung des Hinweises auf die Patenterteilung:
**31.10.84 Patentblatt 84/44**

(84) Benannte Vertragsstaaten:
**AT BE CH DE FR GB IT LI NL SE**

(56) Entgegenhaltungen:
**AU - A - 436 212**
**US - A - 3 091 501**
**US - A - 3 174 812**
**US - A - 3 337 277**
**US - A - 3 704 924**
**US - A - 3 887 251**
**US - A - 3 924 909**
**US - A - 4 121 853**
**US - A - 4 169 635**

(73) Patentinhaber: **Hunger, Walter, Otto-Nagler-Strasse 13, D-8700 Würzburg (DE)**

(72) Erfinder: **Hunger, Walter, Otto-Nagler-Strasse 13, D-8700 Würzburg (DE)**

(74) Vertreter: **Nix, Frank Arnold, Dr., Kröckelbergstrasse 15, D-6200 Wiesbaden (DE)**

**Beschreibung**

Die vorliegende Erfindung bezieht sich auf eine Sattelkupplung zur Verbindung eines Sattelanhängers mit einer Sattelzugmaschine. Bei solchen Sattelkupplungen werden die vertikalen Kräfte vom Sattelanhänger auf die Sattelzugmaschine übertragen mittels einer an der letzteren befestigten Kupplungsplatte, die gleitend zusammenwirkt mit einer am Sattelanhänger befestigten Gleitplatte.

Zur Sicherstellung einer einwandfreien Bewegung der Platten gegeneinander, insbesondere bei Kurvenfahrten des Sattelzuges, und zur Verringerung des Verschleißes zwischen ihnen müssen Maßnahmen zur Verringerung der Reibung zwischen den Platten ergriffen werden. Außer der noch weiterhin üblichen Fettschmierung von metallischen Plattenoberflächen ist es aus der US-PS 3 337 277 bekannt, wenigstens eine der beiden Plattenoberflächen mit einer Antifriktionsschicht, z. B. aus Polytetrafluoräthylen, zu beschichten. Die vorliegende Erfindung geht gemäß dem Oberbegriff des Patentanspruchs 1 von einer solchen Ausbildung aus, bei der sowohl auf die Kupplungsplatte der Sattelzugmaschine als auch auf die Gleitplatte des Sattelanhängers eine Antifriktionsschicht aufgebracht ist.

Allerdings ist das Reiben zweier Antifriktionsschichten gegeneinander weniger vorteilhaft als die Paarung einer solchen Schicht mit einer Stahloberfläche. Außerdem wären bei der Ausbildung mit zwei Antifriktionsschichten diese als Verschleißteil anzusehenden Schichten doppelt vorhanden. Aber auch wenn man die bekannte Ausbildung in der Variante der Paarung einer Antifriktionsschicht mit einer Stahloberfläche betrachtet, wäre als Nachteil zu vermerken, daß sich diese Paarung nicht gegeneinander einlaufen kann, weil im normalen Fahrbetrieb einer Sattelzugmaschine verschiedene wechselnde Sattelanhänger aufgesattelt werden und die jeweils anderen Oberflächenstrukturen zu einem raschen Verschleiß der Antifriktionsschichten führen.

An sich ist aus der US-PS 3 924 909 eine Sattelkupplung bekannt, bei der eine Antifriktionsschicht bleibend mit einer Stahloberfläche zusammenwirkt. Bei dieser Ausbildung ist auf der Kupplungsplatte eine Schwenkplatteneinheit um einen begrenzten Winkel schwenkbar gelagert, die aus einer Deckplatte mit an deren Unterfläche befestigter Antifriktionsschicht besteht. Diese Antifriktionsschicht gleitet an der Stahloberfläche der Kupplungsplatte innerhalb des durch Anschläge eng begrenzten Schwenkbereichs. Sie soll ihre reibungsvermindernde Wirkung nur entfalten bei hohen Fahrgeschwindigkeiten innerhalb der für diesen Betrieb charakteristischen kleinen Schwenkwinkel zwischen Sattelzugmaschine und Sattelanhänger.

Ein Nachteil dieser Ausbildung ist die Kompliziertheit der Konstruktion und der Lagerung der Schwenkplatteneinheit: Am Innenumfang der mit der Antifriktionsschicht vorgesehenen Deckplatte ist ein radial nach innen überstehender Haltering angenietet, welcher in eine Ausnehmung greift, die von einem an der Kupplungsplatte festgeschraubten Lagerring gebildet ist, der innerhalb einer zentralen Ausnehmung der Schwenkplatteneinheit liegt. Ein weiterer Nachteil dieser Ausbildung ist, daß der vom ungeschützten Außenrand her zwischen die Kupplungsplattenoberfläche und die Antifriktionsschicht eindringende Schmutz nur mit Mühe, nämlich nach einer Demontage der Schwenkplatteneinheit entfernt werden kann.

Ähnliches gilt für die aus US-PS 4 121 853 bekannte Ausbildung mit einer an der Unterseite des Sattelanhängers befestigten Schwenkplatteneinheit, bestehend aus einer auf den Königszapfen aufzuschiebenden Lagerbüchse mit Flansch, auf die unter Zwischenlage einer selbständigen Antifriktionsplatte eine frei drehbare Bodenplatte und eine am Sattelanhänger festzuschraubende Oberplatte aufgesetzt sind. Die letztere ist noch mit der Lagerbüchse verschweißt. Zur Stützung der Bodenplatte sind noch vier an deren Umfang verteilte und ihren Rand übergreifende Flanschblöcke vorgesehen.

Auch bei dieser Ausbildung besteht die Schwenkplatteneinheit aus einer Vielzahl von Einzelelementen und ist deshalb konstruktiv recht aufwendig; auch hier ist eine eventuell erforderliche Reinigung der beim Schwenken zusammenwirkenden Flächen kaum möglich. In beiden, vorstehend betrachteten Ausbildungen treten darüber hinaus an der jeweiligen Lagerung der Schwenkplatteneinheit zusätzliche Reibflächen auf.

Aufgabe der Erfindung ist es, eine konstruktiv sehr einfache und leicht zu wartende Sattelkupplung zu schaffen, bei der eine weitere Verringerung der Reibung und eine Erhöhung der Lebensdauer gelingt. Weiterhin soll eine Nachrüstung vorhandener Sattelkupplungen zur erfindungsgemäßen Ausbildung leicht und ohne großen Arbeits- und Kostenaufwand möglich sein.

Ausgehend von der eingangs genannten bekannten Ausbildung mit einer auf der Oberfläche der Kupplungsplatte aufgebrachten Antifriktionsschicht wird diese Aufgabe erfindungsgemäß dadurch gelöst, daß der freien Oberfläche der Gleitplatte des Sattelanhängers als Gleitzwischenlage ein Stahlblech zugeordnet ist, dessen freie Oberfläche auf eine maximale Rauhigkeit von 1 μm feinstbearbeitet ist und daß eine Bohrung zum Durchtritt des Königszapfens aufweist, deren Durchmesser ein spielfreies Aufschieben auf diesen ermöglicht, und keine weitere Verbindung zwischen Stahlblech und Gleitplatte vorhanden ist.

Bei dieser erfindungsgemäßen Ausbildung bleibt das Stahlblech bei der Sattelzugmaschine; wenn also ein anderer Sattelanhänger aufgesattelt wird, so wird zuvor auf dessen Königszapfen das zur Sattelzugmaschine gehörende Stahlblech aufgeschoben. Auf diese Weise werden das Stahlblech und die Antifriktionsschicht der Kupplungsplatte sich gegeneinander einlaufen, so daß sich ein minimaler Verschleiß der Antifriktionsschicht ergibt. Gleichzeitig kann es nicht zu Schmutzansammlungen zwischen dem Stahlblech und der Antifriktionsschicht kommen, weil bei jedem Wechsel des Sattelanhängers die zusammenwirkenden Flächen freigelegt werden.

Durch den spielfreien Sitz des Stahlblechs auf dem Königszapfen ergibt sich eine besonders einfache Anbringbarkeit und Auswechselbarkeit desselben und eine besondere Verbindung zwischen Sthalblech und Gleitplatte wird entbehrlich. Das Stahlblech kann nicht frei vom Königszapfen herunterfallen, weil es sofort bei einer auch nur geringen Entfernung des Stahlblechs von der Gleitplatte zu einem Verkanten des Stahlblechs gegenüber dem Königszapfen kommt, was ein weiteres Herunterrutschen des Stahlblechs verhindert. Andererseits kann das Stahlblech leicht von Hand vom Königszapfen heruntergezogen werden, wenn es dabei nur in rechtwinkliger Ausrichtung diesem gegenüber gehalten wird. Gegebenenfalls kann dabei ein Hin- und Herdrehen des Stahlblechs die Abnahme weiter erleichtern.

Im Fahrbetrieb ist eine besondere Befestigung des Stahlblechs an der Gleitplatte ebenfalls entbehrlich, weil es wegen der zwischen diesen Bauteilen wirksamen höheren Reibung zu keinen Drehungen gegeneinander kommen wird. Die Reibung zwischen der Oberfläche der Gleitplatte und der an dieser anliegenden, nach oben weisenden Oberfläche des Stahlblechs, die beide keine besondere Oberflächenbearbeitung aufweisen, ist naturgemäß wesentlich größer als die Reibung zwischen der Antifriktions-Kunststoffschicht der Kupplungsplatte und der mit dieser zusammenwirkenden feinstbearbeiteten freien Oberfläche des Stahlblechs. Deshalb wird es im Fahrbetrieb nur zu Drehungen der Antifriktionsschicht gegenüber dem Stahlblech kommen.

Vorteilhafterweise besteht das Stahlblech aus nichtrostendem Stahl, weil dann die Gefahr der Korrosion und des Rostens beseitigt ist, die sonst die geforderte Oberflächenqualität in Frage stellen würde. Diese kann z. B. durch Hartverchromen erzielt werden.

Zur Illustration der Erfindung sollen die Zeichnungen dienen. Es zeigt

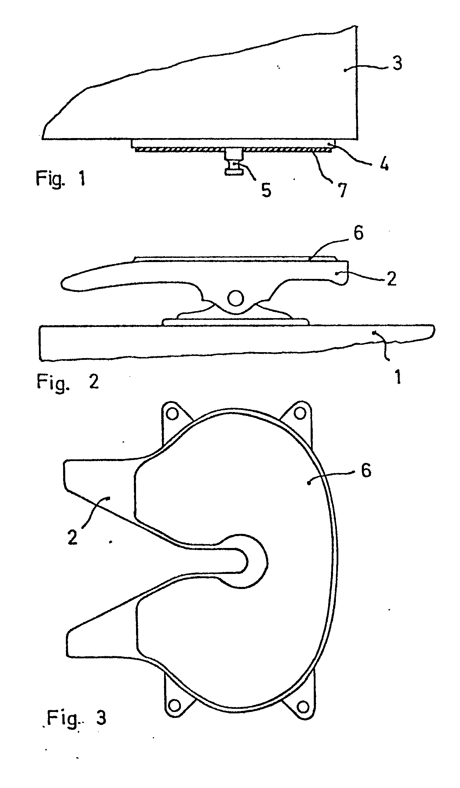

Fig. 1 die Gleitplatte mit Königszapfen eines Sattelanhängers in Seitenansicht;

Fig. 2 die Kupplungsplatte einer Sattelzugmaschine in Seitenansicht;

Fig. 3 die Draufsicht auf die Kupplungsplatte.

Auf einer nicht weiter gezeigten Sattelzugmaschine 1 sitzt eine in üblicher Weise schwenkbar um die Querachse gelagerte Kupplungsplatte 2. Auf diese wird beim Aufsatteln eines nicht weiter gezeigten Sattelanhängers 3 dessen Gleitplatte 54 abgesenkt bzw. aufgeschoben, bis der Königszapfen 5 im Verschluß der Kupplungsplatte 2 verriegelt werden kann.

Auf der Oberfläche der Kupplungsplatte 2 ist eine Antifriktions-Kunststoffschicht 6 aufgebracht. Auf den Königszapfen 5 ist ein Stahlblech 7 aufgeschoben, dessen zum Durchtritt des Königszapfens vorgesehene Bohrung so bemessen ist, daß das Stahlblech spielfrei aufgeschoben werden kann. Dann hält es sich selbst durch die weiter oben beschriebene Verkantungswirkung, die eine besondere Verbindung zwischen Stahlblech und Gleitplatte entbehrlich macht.

Die nach unten weisende freie Oberfläche des Stahlblechs 7, die im Fahrbetrieb mit der Antifriktions-Kunststoffschicht gleitend zusammenwirkt, ist derart feinstbearbeitet, daß ihre Rauhtiefe unter 1 μm liegt. Dadurch wird erreicht, daß trotz fehlender Befestigung des Stahlblechs 7 an der Gleitplatte 4 Drehungen nur zwischen dem Stahlblech 7 und der Antifriktions-Kunststoffschicht 6 stattfinden, und zwar ohne Verschleiß.

Im täglichen Fahrbetrieb gehört also zu einer bestimmten Sattelzugmaschine 1 ein bestimmtes Stahlblech, das an der Gleitplatte des jeweils aufzusattelnden Sattelanhängers schnell und einfach angebracht werden kann. Auf diese Weise ist die Antifriktionsschicht 6 immer mit der gleichen feinstbearbeitenden Stahloberfläche gepaart. Dadurch können sich diese Flächen aufeinander einlaufen, der Verschleiß wird minimal, und es wird eine hohe Lebensdauer erreicht.

## Patentansprüche

1. Sattelkupplung zur Verbindung eines Sattelanhängers (3) mit einer Sattelzugmaschine (1) mit einer an der Sattelzugmaschine befestigten Kupplungsplatte (2), auf deren Oberfläche eine Antifriktionsschicht (6) aufgebracht ist und die zur Aufnahme der vertikalen Kräfte gleitend zusammenwirkt mit einer am Sattelanhänger (3) befestigten Gleitplatte (4), an deren freier Oberfläche ebenfalls eine im Betrieb relativ zu ihr unbewegliche Gleitzwischenlage angeordnet ist, dadurch gekennzeichnet, daß die Gleitzwischenlage ein Stahlblech (7) ist, dessen freie Oberfläche auf eine maximale Rauhigkeit von 1 μm feinstbearbeitet ist und das eine Bohrung zum Durchtritt des Königszapfens (5) aufweist, deren Durchmesser ein spielfreies Aufschieben auf diesen ermöglicht, und keine weitere Verbindung zwischen Stahlblech (7) und Gleitplatte (4) vorhanden ist.

2. Sattelkupplung nach Anspruch 1, dadurch gekennzeichnet, daß das Stahlblech (7) aus nichtrostendem Stahl besteht.

3. Sattelkupplung nach Ansprüchen 1 oder 2, dadurch gekennzeichnet, daß die Antifriktionsschicht (6) der Kupplungsplatte (2) aus einem Polytetrafluoräthylen (PTFE)-Verbundwerkstoff besteht.

## Claims

1. Low friction saddle coupling for use in coupling a trailer (3) to a tractor vehicle (1) comprising a coupling plate (2) mounted on the tractor vehicle, the surface of the coupling plate being covered by an antifriction layer (6) and slidably interacting with a slide plate (4) attached to the trailer (3) for supporting the vertical forces, the free surface of the slide plate being provided with a gliding inset, in operation remaining in a fixed position relative to the surface, characterized in that the gliding inset is a steel plate (7), the free surface of which is machined to a maximum roughness of 1 µm and which has a bore for permitting passage of the king journal (5), the diameter of which allows said passage with minimal clearance, and that there is no further connection between the steel plate (7) and the slide plate (4).

2. Low friction saddle coupling according to claim 1, characterized in that the steel plate (7) is made of stainless steel.

3. Low friction saddle coupling according to claims 1 or 2, characterized in that the antifriction layer (6) of the coupling plate (2) is made of a polytetrafluoroethylene (PTFE) composite material.

## Revendications

1. Sellette d'attelage antifriction pour raccorder une semi-remorque (3) à un tracteur (1), comportant un plateau d'accouplement (2) fixé sur le tracteur, sur la surface duquel est appliquée une couche intifriction (6) et qui, pour l'absorption des forces verticales, coopère en glissement avec un plateau de glissement (4) qui est fixé sur la semiremorque (3) et sur la surface libre duquel est également disposée une couche intermédiaire de glissement relativement immobile par rapport à lui lors de la marche du véhicule, caractérisé par le fait que la chouche intermédiaire de glissement est une tôle d'acier (7) dont la surface libre est usinée fin à une rugosité maximale de 1 µm et qui, pour le passage du maître-pivot (5), comporte un perçage dont le diamètre permet un emmanchement sans jeu sur celui-ci, et qu'aucun autre raccordement n'existe entre la tôle d'acier (7) et le plateau de glissement (4).

2. Sellette d'attelage antifriction selon la revendication 1, caractérisée par le fait que la tôle d'acier (7) est réalisée en acier inoxydable.

3. Sellette d'attelage antifriction selon les revendications 1 ou 2, caractérisée par le fait que la couche antifriction (6) du plateau d'accouplement (2) est réalisée en un matériau composite-polytétrafluoroéthylène (PTFE).

Fig. 1

Fig. 2

Fig. 3